# FASCICULE DE BREVET EUROPEEN

(11) **EP 0 666 191 B1**
(45) Date de publication et mention de la délivrance du brevet: **24.09.1997**
(21) Numéro de dépôt: 95400258.0
(22) Date de dépôt: 08.02.1995
(51) Int. Cl.: B60J 10/08

(54) **Joint de porte autopositionnable pour véhicule automobile**
Selbsteinstellende Türdichtung für Kraftfahrzeug
Self positioning sealing joint for motor vehicle door

(30) Priorité: 08.02.1994 FR 9401399
(43) Date de publication de la demande: 09.08.1995
(73) Titulaire: Société Anonyme dite: MESNEL, 92000 Nanterre (FR)
(72) Inventeur: Cholot, Robert, F-27480 Fleury-la-Foret (FR)
(74) Mandataire: Jolly, Jean-Pierre

(56) Documents cités:
- FR-A- 1 517 612
- FR-A- 2 370 206

## Description

La présente invention concerne un joint de porte pour véhicule automobile, autopositionnable sur une partie en saillie d'un encadrement de porte de la carrosserie du véhicule.

De tels joints de porte comprennent une partie à section en U, formant pince, qui coiffe en la pinçant fermement la partie saillante de l'encadrement de porte, et un profilé tubulaire attenant à cette pince et destiné à être comprimé entre la porte et l'encadrement de porte de la carrosserie du véhicule, pour assurer l'étanchéité ainsi que l'isolation phonique et thermique de l'intérieur du véhicule.

La partie formant pince est habituellement en une matière plastique, notamment en polychlorure de vinyle, et comporte une armature métallique. Des lèvres faisant saillie à partir des branches latérales du U de la section en U, en direction de la partie en saillie coiffée par cette pince, évitent une désolidarisation intempestive de celle-ci. Le profilé tubulaire est généralement en caoutchouc compact ou en caoutchouc cellulaire, de manière à pouvoir se déformer lorsqu'il est comprimé entre la porte et l'encadrement de porte et à reprendre sa forme initiale par élasticité, lorsqu'il n'est pas sollicité. Une cloison interne peut diviser le profilé en deux parties tubulaires. Cette cloison sert à renforcer les qualités d'isolation phonique du joint.

De tels joints de porte sont très répandus dans la technique et on en a proposé de très nombreuses variantes. Ils sont le plus souvent fabriqués par co-extrusion des différents constituants.

Ces joints donnent entière satisfaction, mais on rencontre habituellement des problèmes dans les angles de l'encadrement de porte,où le joint tubulaire se décale par rapport à cet encadrement.

Pour remédier à cet inconvénient, on a proposé diverses solutions, notamment les suivantes :
- injection d'une mousse de matière plastique dans la portion d'angle du profilé tubulaire
- découpe de la paroi de cette portion d'angle et surmoulage d'une partie rapportée en caoutchouc compact
- déformation locale de l'armature métallique
- port-formage à chaud de la partie d'angle, laquelle est mise en forme et chauffée.

Toutes ces opérations interviennent après la réalisation du joint de porte par extrusion, et elle sont par conséquent coûteuses.

La présente invention vise à remédier à cet inconvénient en proposant un joint de porte, dans lequel le profilé tubulaire est maintenu dans la position désirée par rapport à la partie formant pince, en particulier dans les portions d'angle, sans nécessiter d'opérations de fabrication postérieures à sa réalisation par extrusion.

A cet effet, l'invention propose, lors du montage du joint sur une partie en saillie d'un encadrement de porte, de coincer entre cette partie en saillie et la partie formant pince une lèvre faisant saillie latéralement à partir du profilé tubulaire en direction de la partie en saillie.

L'invention a par conséquent pour objet un joint de porte pour véhicule automobile, comprenant une partie à section en U formant pince, destinée à coiffer une partie en saillie d'un encadrement de porte de la carrosserie du véhicule, et un profilé tubulaire en un matériau élastiquement déformable attenant à la partie formant pince, le profilé tubulaire comportant une lèvre latérale (Joint du type divulgué dans US-A-3 638 359), caractérisé en ce que la lèvre latérale fait saillie latéralement au-dessous de la partie formant pince, en direction de l'évidement en forme de U de celle-ci, cette lèvre faisant corps avec une partie du profilé tubulaire, étant réalisée comme cette partie en un matériau élastique compact d'une dureté d'environ 60 à 75 Shore A et ayant une dimension suffisante pour pouvoir être pincée entre la partie formant pince et la partie en saillie, lors de la mise en place de la partie formant pince sur cette partie en saillie.

La lèvre faisant saillie à partir du profilé tubulaire et la partie attenante de ce profilé pourront être, par exemple, en caoutchouc compact, tandis que le reste du profilé tubulaire pourra, de façon usuelle, être en caoutchouc cellulaire ou, éventuellement, en un caoutchouc compact de dureté moindre.

Une fois le joint monté, avec la partie formant pince coiffant la partie en saillie de la porte et la lèvre attenante au profilé coincée entre la partie formant pince et la partie en saillie de la porte, le profilé sera parfaitement maintenu en position sur toute sa longueur, par l'intermédiaire de cette lèvre, à une distance constante et régulière de la partie en saillie et ce en toute partie de la porte ou de l'encadrement de porte. La partie formant pince pourra, elle, être de façon usuelle en un plastomère d'une dureté d'environ 60 à 85 Shore, par exemple en polychlorure de vinyle ou en E.P.D.M..

La lèvre faisant saillie à partir du profilé tubulaire et la partie attenante du profilé tubulaire doivent être en un matériau compact élastique et avoir une dureté comprise entre environ 60 et environ 75 Shore A, afin d'agir à la manière d'un ressort et de compenser ainsi les sollicitations du profilé tubulaire, tout en offrant une faible résistance à la déformation.

C'est en celà que le joint de porte conforme à l'invention se distingue des joints antérieurs, dans lesquels était déjà prévue une lèvre attenante au profilé tubulaire et faisant saillie à partir de celui-ci pour être pincée entre la partie formant pince et la partie en saillie d'un encadrement de porte qu'elle coiffe (voir, par exemple, FR-A-2 269 006 ou US-A-3 638 359), mais, dans ces joints de la technique antérieure, la lèvre était en un même matériau que le profilé tubulaire, notamment en caoutchouc cellulaire, et n'était donc pas apte à maintenir fermement en position ce profilé.

Le joint conforme à l'invention se prête particulièrement bien à l'équipement d'encadrements de porte présentant des parties fortement incurvées. En outre, il présente l'avantage d'être fermement maintenu en position, lorsque le véhicule roule et est soumis à des vibrations, ou encore lorsque la porte est ouverte et refermée violemment, à diverses reprises.

Les dessins annexés, qui n'ont pas de caractère limitatif, illustrent une forme de réalisation de l'invention. Sur ces dessins :
La figure 1 est une coupe transversale du joint de porte ;
La figure 2 est une vue analogue représentant ce même joint de porte en position sur un rebord saillant d'un encadrement de porte.

Le joint de porte représenté sur les dessins est d'un type usuel. Il comprend une partie 1 à section transversale en U, en un plastomère tel que le polychlorure de vinyle ou un E.P.D.M, à laquelle est attenant un profilé tubulaire 2.

La partie formant pince 1 est destinée à coiffer un rebord saillant 3, constitué de deux parties soudées de deux panneaux métalliques, 3a, 3b, d'un encadrement de porte. De façon à pincer fermement le rebord 3, la partie 1 comporte une armature métallique 4 noyée dans la matière plastique. Cette armature 4 peut être de types variés, par exemple du type décrit dans le brevet français FR-A-2 452 643 de la Demanderesse. Comme décrit dans ce brevet, des fils inextensibles 5 sont également noyés dans la matière plastique au voisinage de l'armature 4, parallèlement à celle-ci. Des lèvres 6, en la même matière que la pince 1 ou en une matière différente font saillie à partir de chaque face interne des branches du U en direction de l'autre branche du U, afin que cette pince 1 soit parfaitement solidaire du bord saillant 3.

Le profilé tubulaire 2 est destiné à être comprimé entre une porte d'un véhicule automobile et l'encadrement de porte, pour assurer l'étanchéité de cette porte. Il est en un matériau élastiquement déformable, qui, dans le cas du dessin, est du caoutchouc cellulaire, mais qui pourrait aussi être du caoutchouc compact d'une faible dureté, de à Shore A. Une cloison interne 7 divise le profilé 2 en deux conduits, en vue d'accroître son effet d'insonorisation.

Conformément à l'invention, une lèvre 8 en un caoutchouc compact, d'une dureté comprise entre 60 et 75 Shore A, fait saillie latéralement à partir d'une partie 9 du profilé 2, en ce même caoutchouc, au-dessous de la partie formant pince, en direction de l'évidement en forme de U de cette partie.

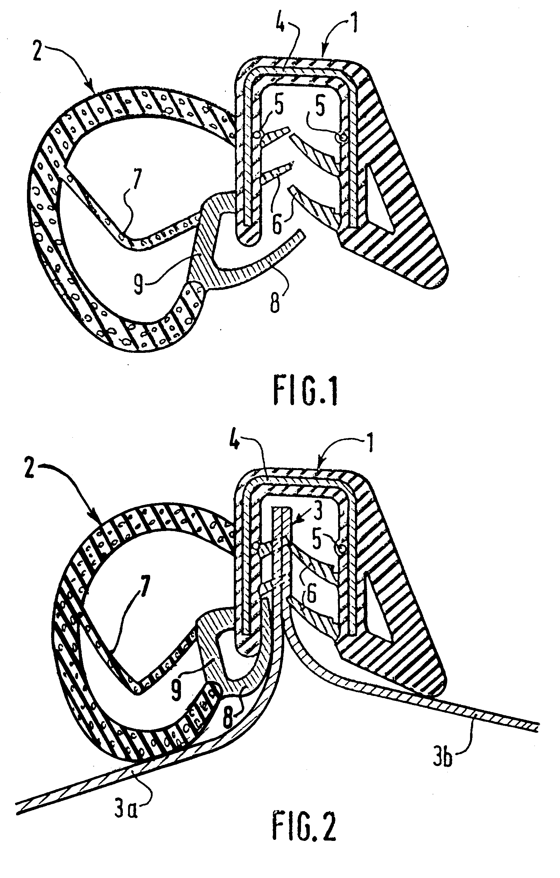

Comme représenté sur la figure 2, cette lèvre 8 est destinée, lors du montage du joint, à être pincée entre la branche contiguë de la partie 1 et la partie saillante 3, pour exercer une traction sur le profilé tubulaire et le maintenir fermement en position, suivant toute la longueur du joint de porte. Du fait de leur élasticité, la lèvre 8 et la partie 9 compensent les sollicitations auxquelles est soumis le profilé 2, qui occupe en tout emplacement, en particulier dans les angles, sensiblement la même position relative par rapport au rebord 3.

Il est clair que le joint conforme à l'opération peut être réalisé par co-extrusion en une unique opération.

## Revendications

1. Joint de porte pour véhicule automobile, comprenant une partie à section en U (1) formant pince, destinée à coiffer une partie en saillie (3) d'un encadrement de porte de la carrosserie du véhicule, et un profilé tubulaire (2) en un matériau élastiquement déformable attenant à la partie formant pince, le profilé tubulaire (2) comportant une lèvre (8) latérale, ce joint de porte étant caractérisé en ce que la lèvre latérale (8) fait saillie latéralement au-dessous de la partie formant pince (1), en direction de l'évidement en forme de U de celle-ci, cette lèvre (8) faisant corps avec une partie (9) du profilé tubulaire, étant réalisée comme cette partie (9) en un matériau élastique compact d'une dureté d'environ 60 à 75 Shore A et ayant une dimension suffisante pour pouvoir être pincée entre la partie formant pince (1) et la partie en saillie (3), lors de la mise en place de la partie formant pince sur cette partie en saillie.

2. Joint de porte selon la revendication 1, caractérisé en ce que la lèvre (8) faisant saillie à partir du profilé tubulaire (2) et la partie attenante (9) de ce profilé sont en caoutchouc compact.

3. Joint selon l'une des revendications 1 et 2, caractérisé en ce que le profilé tubulaire (2) est en caoutchouc compact d'une dureté Shore inférieure à celle de la lèvre (8) ou en caoutchouc cellulaire.

## Claims

1. A door seal for a motor vehicle comprising a portion (1) of U-shaped section forming a gripping portion intended to fit over a projecting portion (3) of a door frame of the body of the vehicle, and a tubular shaped portion (2) of an elastically deformable material adjoining the gripping portion, the tubular shaped portion (2) comprising a lateral lip (8), said door seal being characterised in that the lateral lip (8) projects laterally below the gripping portion (1) in the direction of the opening of U-shape thereof, said lip (8) being integral with a part (9) of the tubular shaped portion, being made like said part (9) of a compact elastic material of a hardness of about 60 to 75 Shore A and being of a sufficient dimension that it can be gripped between the gripping portion (1) and the projecting portion (3) when the gripping portion is set in position on said projecting portion.

2. A door seal according to claim 1 characterised in that the lip (8) projecting from the tubular shaped portion (2) and the adjoining part (9) of said shaped portion are of compact rubber.

3. A seal according to one of claims 1 and 2 characterised in that the tubular shaped portion (2) is of compact rubber of a Shore hardness of less than that of the lip (8) or of cellular rubber.

## Patentansprüche

1. Türdichtung für Fahrzeuge, mit einem U-förmigen Klemmabschnitt (1), der dazu bestimmt ist, einen vorspringenden Abschnitt (3) einer Einfassung der Fahrzeugkarosserie abzudecken, und mit einem rohrförmigen Profilelement aus elastisch verformbarem Material angrenzend an den Klemmabschnitt, wobei das rohrförmige Profilelement (2) eine seitliche Lippe aufweist, dadurch gekennzeichnet, daß die seitliche Lippe (8) seitlich unter dem Klemmabschnitt (1) in Richtung der U-förmigen Ausnehmung des Klemmabschnitts vorspringt, wobei diese Lippe (8) mit einem Abschnitt (9) des rohrförmigen Profilelements eine Einheit bildet, daß dieser Abschnitt (9) aus einem kompakten elelastischem Material mit einer Härte von etwa 60 bis 75 Shore A hergestellt ist und eine Abmessung aufweist, die ausreicht, zwischen dem Klemmabschnitt (1) und dem vorspringenden Abschnitt (3) geklemmt Zu werden, wenn der Klemmabschnitt auf dem vorspringenden Abschnitt montiert wird.

2. Türdichtung nach Anspruch 1, dadurch gekennzeichnet, daß die von dem rohrförmigen Profilelement (2) vorspringende Lippe (8) und der angrenzende Abschnitt (9) dieses Profilelements aus Kompaktkautschuk sind.

3. Türdichtung nach einem der Ansprüche 1 oder 2, dadurch gekennzeichnet, daß das rohrförmige Profilelement (2) aus Kompaktkautschuk einer Shore-Härte ist, die geringer als diejenige der Lippe (8) ist, oder aus Zellkautschuk ist.
